# EUROPEAN PATENT APPLICATION

(11) **EP 3 101 412 A1**
(43) Date of publication of application: **07.12.2016**
(21) Application number: 15170743.7
(22) Date of filing: 04.06.2015
(51) Int. Cl.: G01N 21/64, G01N 21/65, G01N 21/94

(54) **MOBILE APPARATUS FOR ANALYZING A SURFACE AREA OF AN OBJECT USING RAMAN SPECTROSCOPY AND FLUORESCENCE**

(71) Applicant: rascope AG, 9443 Widnau (CH)
(72) Inventor: Schneider, Urs, 9444 Diepoldsau (CH)
(74) Representative: Schulz Junghans Patentanwälte PartGmbB

(57) **Abstract**

The invention relates to an apparatus for analyzing a surface area of an object, comprising: a laser device (10) configured to emit monochromatic incident light (101) of a first wavelength (λ₁) as well as optionally a monochromatic incident light (102) of a second wavelength (λ₂) that differs from the first wavelength (λ₁), a first deflection means (20) configured to deflect said incident light (101, 102) onto a point (Pᵢⱼ(xᵢ, yⱼ)) of a surface area (A) of an object that is to be analyzed so that scattered light (104) is generated at said point (Pᵢⱼ(xᵢ, yⱼ)), wherein said deflection means (20) is further configured to deflect said incident light (101, 102) such that said surface area (A) is scanned in a pointwise fashion by said incident light (101, 102), a first sensor means (40) configured to detect said scattered light (104) and to provide from said detected scattered light (104) a scatter data set (Sᵢⱼ(λₖ)) for the respective point (Pᵢⱼ(xᵢ, yⱼ)), wherein the respective scatter data set (Sᵢⱼ(λₖ)) comprises intensities of the detected scattered light (104) for different wave numbers, and a processing unit (50) for processing and/or analyzing said data sets. Further, the invention relates to a method for analyzing a surface area of an object.

## Description

The invention relates to an apparatus for analyzing a surface area of an object as well as to a method for analyzing a surface area of an object.

Usually, Raman spectra or laser induced fluorescence analysis as well as their combination is applied to a single point or relatively small surface area.

Such methods are for instance disclosed in US 2012/0038908, US 2012/0078524 and US 2007/0153268,.

Based on the foregoing, the problem underlying the present invention is to provide an apparatus and a method that allows conducting an analysis of a surface area of an object in a reliable and easy to handle manner.

This problem is solved by an apparatus according to claim 1 and a method according to claim 11. Preferred embodiments are stated in the respective embodiment and are described below.

According to claim 1, the apparatus for analyzing a surface area of an object, comprises:
- a laser device configured to emit monochromatic incident light of a first wavelength as well as particularly a monochromatic incident light of a second wavelength that differs from the first wavelength,
- a first deflection means configured to deflect said incident light onto a point of a surface area of an object that is to be analyzed so that scattered light and particularly fluorescent light is generated at said point, wherein said deflection means is further configured to deflect said incident light such that said surface area is scanned in a pointwise fashion by said incident light, wherein said incident light moves from one point of the surface area to a next point of the surface area according to a pre-defined pattern, e.g. until the whole surface area has been scanned,
- a first sensor means configured to detect said scattered light traveling from the respective point to the first sensor and to provide from said detected scattered light a scatter data set for the respective point, wherein the respective scatter data set comprises intensities (or quantities derived therefrom) of the detected scattered light for different wave numbers or for a quantity derived from said wave numbers (thus said scatter data sets comprise spectra of the detected scattered light), and
- preferably a processing unit for processing and/or analyzing said data sets.

In this way the present invention uses a raster principle that is not based on fixing the apparatus and letting the object move to analyze the surface, but on deflecting the respective incident light beam by means of at least one (e.g. movable or tiltable) deflection means that allows scanning of the relative large surface area of the object to be analyzed without the necessity of moving the apparatus itself upon the measurement.

According to an embodiment of the apparatus according to the invention, the apparatus further comprises a second sensor means configured to detect said fluorescence light and to provide from said detected fluorescent light fluorescence data for the respective point, wherein the respective fluorescence data comprises the intensity of the detected fluorescent light from the respective point.

According to an embodiment of the present invention, said apparatus is a mobile device, i.e. a hand-held device that can be held in one hand of a user and directed towards an object that is to be analyzed. The apparatus may also be provided in other dimensions/configurations. Particularly, the apparatus can be used in a sensor for in-line, on-line or at-line measurements, particularly, the apparatus may be configured as a portable desktop device. Other forms are also possible.

This allows one to conduct mobile analysis of surface areas of objects and particularly to determine a density distribution of contaminations of said surface areas, for instance of food or other arbitrary materials or objects

Further, analyzing the Raman spectra in conjunction with the laser induced emission an object such as an organic tissue fluoresces on its own, which allows a fluorescence analysis of said object per point of said surface. In case the individual (scanning) points are compounded to form an image, bacteria, germs, and yeasts can be identified. Furthermore, arbitrary contaminations and microorganism can be detected and determined.

Preferably, the present method and apparatus according to the invention is applied to the field of foodstuffs, agriculture, chemistry, pharmacy, life sciences, particularly diagnostics, textile industry, safety, protection against plagiarism, and applications in the oil and gas industry.

According to an embodiment of the apparatus according to the invention, the first sensor means comprises a Raman spectroscope, wherein said scattered light is or comprises inelastically scattered light that was Raman scattered at the respective point; i.e. said scatter data set is a Raman data set.

Further, according to an embodiment of the apparatus according to the invention, the apparatus, as indicated above, is designed as mobile apparatus, preferably a hand-held apparatus, that is designed to be held by a user (e.g. in a single hand of the user), particularly upon operation of the apparatus, i.e., while the incident light beams scan the surface area of said object point by point.

Further, according to an embodiment of the apparatus according to the invention, the first deflection means comprises a movable or tiltable mirror, particularly an MEMS mirror for deflecting said incident light (other scanning devices may also be used). Further, said mirror preferably comprises an actuator means for moving the mirror such that the incident light (beams) can be deflected so as to scan the surface area pointwise. Particularly, the apparatus comprises an energy source for providing electrical energy to the actuator as well as a control unit that is configured to control movement of the mirror such that the incident light (beams) can be deflected by means of the mirror so as to let them scan the surface area of the object to be analyzed point by point as described herein.

Particularly, such a mirror or MEMS (micro-electromechanical system) mirror also denoted as micromirror, microscanner, or micro-scanning mirror, is a device that is configured to rotate a single mirror about two independent axes (or, equivalently, a first mirror about a first axis and a second mirror about a second axis) so as to deflect a light beam in order to e.g. scan a surface with the deflected light beam.

Particularly, the diameter of said mirror ranges between 1 and 35 mm, but may also be larger or smaller than these values. Further, particularly, the deflection movement of the mirror about each axis can be static, quasi-static or resonant. The individual axes can be operated in different modes. For instance, the deflection movement of the mirror about one axis can be static or quasi-static while it can be resonant about the other axis.

Particularly, the mirror of said first deflection means is designed to be moved by means of an electromagnetic, electrostatic, thermo-electric, or piezo-electric actuator means. Galvanometers may also be used.

Further, particularly, the mirror or first deflection means may also be configured to deflect the scattered light so that it can be guided to the first sensor.

Particularly, when using an electromagnetic actuator, the latter particularly comprises (e.g. for static, quasi-static or resonant operation) an electrically conducting coil per axis (e.g. arranged on the mirror or respective rotatable structure) that is placed in a magnetic field, so that a current flowing through the respective coil generates Lorentz force tilting the mirror about the respective axis depending on the direction of the current.

Particularly, when using an electrostatic actuator means for moving the mirror, two drives may be used per axis for achieving a quasi-static movement with positive and negative effective direction about the respective axis, e.g. vertical comb drives.

Apart from mirrors, also other scanning devices may be used in embodiments of the present invention.

Further, according to an embodiment of the apparatus according to the invention, the first deflection means is configured to also deflect said fluorescent light coming from the respective point and traveling towards the second sensor.

Further, according to an embodiment of the apparatus according to the invention, the apparatus is configured to let the scattered light travel along an optical path to the first sensor, which optical path bypasses the first deflection means.

Particularly, said apparatus comprises an objective in the form of a telecentric lens (e.g. a compound lens which has its exit pupil at infinity) arranged in said optical path, which objective is configured to guide the elastically scattered light travelling to the first sensor.

Furthermore, particularly, said apparatus comprises a second deflection means for deflecting said scattered light traveling to the first sensor.

Particularly, said objective is arranged behind the second deflection means in the optical path of the scattered light.

Particularly, the second deflection means may be designed like the first deflection means, and may also comprise a mirror, particularly an MEMS mirror for deflecting said incident light (beams) that can be driven and controlled as indicated above. Other scanning devices may also be used.

Preferably, the apparatus is configured to move the two deflection means or their respective mirrors in a synchronous manner, so that from each point, the fluorescent light is guided to the second sensor via the first deflection means while - at the same time - the scattered light is guided via the second deflection means to the first sensor.

Further, according to an embodiment of the apparatus according to the invention, the first deflection means may also be configured to deflect said scattered light coming from the respective point and traveling towards the first sensor.

Here, particularly, at least between the respective point and the first deflection means, the incident light, the fluorescent light and the scattered light travel along the same optical path (e.g. in the same channel).

Particularly, also here, said apparatus may comprise an objective, particularly a telecentric lens, arranged behind the first deflection means in the optical path of the scattered light, which objective lens is configured to guide said scattered light travelling to the second sensor.

Further, according to an embodiment of the apparatus according to the invention, the apparatus comprises a separate probe head comprising said first deflection means, which probe head is connected via an (e.g. flexible) light guiding means to a housing of the apparatus accommodating said sensors and processing unit. The light guiding means may comprise at least one optical fiber such as a glass fiber for guiding the respective light.

The advantage of this embodiment lies within the fact that said housing may be carried in a pocket or a dedicated holder worn by the user, while merely the probe head has to be handled/moved by the user for conducting the measurement.

It is to be noted that apart from the deflection means and said objectives. The apparatus according to the invention may comprise further (e.g. static) optical elements such as mirrors, deflection devices, lenses, or beam splitters in order to guide the incident light beams and the fluorescent light as well as the scattered light to the desired location. Such optical elements are well known to the person skilled in the art.

Further, according to an embodiment of the apparatus according to the invention, said laser device comprises at least two lasers, particularly diode lasers, for generating said incident light of the first and of the second wave length. The laser device may also comprise three or more lasers so that the first and second wavelength can be varied accordingly.

Particularly, in all embodiments, a first wavelength in the range from 350nm to 1300nm is preferably used, wherein the second wavelength is preferably larger than the first wavelength, preferably in the range from 0.1 to 5nm larger, preferably 0.25nm larger than the first wavelength. Particularly, said incident light (beams) have a Gaussian light intensity distribution having a maximum at the respective first or second wavelength. In this regard e.g. 0.25nm larger means that the maxima are shifted with respect to each other by e.g. 0.25nm. Other light intensity distributions may also be used. Particular wavelengths that can be used for the first and second wavelength are 405nm (λ₁) and 785nm (λ₂) or 405nm (λ₁) und 1064nm (λ₂). Further, a wavelength of 532nm may also be used as λ₁ or λ₂.

Furthermore, according to an embodiment of the apparatus according to the invention, the apparatus comprises an (e.g. electronic) movement compensation unit being configured to compensate movements or vibrations of the apparatus (or of said probe head) upon scanning of said surface so as to particularly allow for performing said measuring and analyzing in real time. Particularly, after a point has been irradiated with the laser device (i.e. with said incident light), the data acquisition is started. In case the apparatus is now shocked or an unwanted movement occurs, this constitutes a disturbance variable. The compensation means is configured to now readjust the first deflection means (or moveable mirror) and particularly also the second deflection means (or movable mirror) such that the respective point (Pᵢⱼ) of the measurement is arranged concentrically with respect to the spot of the laser device (i.e. spot of the incident light).

Further, according to an embodiment of the apparatus according to the invention, the apparatus is configured to
(a) irradiate a point of the surface area with incident light of said first wavelength and to record a corresponding scatter data set and preferably also at least one fluorescence data set or preferably several fluorescence data sets at different successive times, and wherein the apparatus is further preferably configured to irradiate said point thereafter with incident light of said second wavelength and to preferably record a further corresponding scatter data set and optionally at least one further corresponding fluorescence data set or optionally several fluorescence data sets at different successive times,
(b) optionally repeat step (a) one or several times for said point,
(c) to repeat steps (a) to (c) starting with step (a) for a next point of the surface in case the whole surface area has not yet been scanned completely, wherein the apparatus is configured to use the first deflection means for deflecting the incident light onto said next point.

Further, the present invention relates to a method for scanning and/or analyzing a surface area of an object having the features of claim 11 which method preferably uses an apparatus according to the invention described herein.

According to claim 11, the method comprises successively irradiating points of the surface area of said object with incident monochromatic light of a first and particularly of a different second wavelength, wherein said incident light is successively deflected onto said points using a first deflection means, wherein scattered light from the respective point is sensed and provided as a scatter data set at least for the first wavelength and optionally also for the second wavelength, which scatter data sets each comprise intensities of the detected scattered light for different wave numbers (i.e. a spectrum of the detected scattered light from the respective point), and wherein said data sets are preferably used for analyzing said surface area, and wherein preferably also fluorescent light generated at the respective point is sensed and provided as a fluorescence data set for each of said wavelengths, which fluorescence data sets each comprise the intensity of the detected fluorescent light from the respective point,

Preferably, said scattered light is inelastically scattered light (Raman scattering).

Specifically, according to an embodiment of the method according to the invention,
(a) a first point of the surface area is irradiated with incident light of said first wavelength and a corresponding scatter data set and preferably at least one corresponding fluorescence data or preferably several corresponding fluorescence data sets at different successive times are recorded, and wherein thereafter said first point is preferably irradiated with incident light of said second wavelength and preferably a further corresponding scatter data set and optionally a further corresponding fluorescence data set or optionally several corresponding fluorescence data sets at different successive times are recorded,
(b) step (a) is optionally repeated one or several times for the first point,
(a) in case the whole surface area has not yet been scanned completely, the incident light is deflected onto a next (second) point using the first deflection means and steps (a) to (c) are repeated (starting with steo (a)).

Further, according to an embodiment of the method according to the invention, the scatter data of the scatter data set of the respective point of the surface area for the first wavelength is subtracted from the scatter data of the scatter data set of said point for the second wavelength yielding result data for the respective point (also denoted Raman data in case of using inelastic scattering of the incident light). Alternatively, the scatter data itself (e.g. for the first wavelength) may be used as result data, i.e. no subtraction is performed (see also below, e.g. in case the first wavelength does not generate autofluorescence), wherein particularly said result data is used for at least one of:
- determining a material, substance, liquid, or element of the respective point of said surface area.
- determining and/or visualizing a distribution of a purity grade or of a contamination of said surface area,
- forming an average of the result data over all points or a number of selected points of the surface area in order to determine one of: a material, a substance, a liquid, or element comprised by said surface area.
- analyzing the result data of an individual point of the surface area, particularly a hot spot, wherein said result data may be compared with data stored in a data storage of the apparatus.

These measures for analyzing the result or Raman data are known in the state of the art and correspond to well-established procedures.

Further, according to an embodiment of the present invention, the fluorescence data of the fluorescence data sets of the points of the surface area are compounded to form a fluorescence image of the scanned surface area of said object comprising a fluorescent light intensity value for each point of the surface area (or each point of said image). Here, such an image may be formed for the exciting first and the second wavelength separately.

Particularly, at least one hot spot of said image and the image coordinates of said at least one hot spot are automatically detected. In the context of the present invention, a hot spot is a local maximum of the detected intensity of the fluorescent light. For instance, in case a bacteria is sitting on a piece of meat an additional fluorescent light intensity is generated apart from the fluorescent light of the meat. In this way said bacteria constitutes a hot spot.

Here, hot spots in the fluorescence image associated to the first wavelength and/or the second wavelength may be detected and considered for further analysis.

Particularly, in addition, the result data of one or several points of said surface area corresponding to said at least one hot spot is used to analyze the at least one hot spot, particularly to determine one of: a bacteria, a germ, a yeast, or a microorganism.

Further, in an embodiment of the present invention, fluorescence data of the respective point recorded at successive different times (see also above) is used to determine the decay behaviour of the fluorescence light at the respective point, wherein particularly the decay behaviour and said result data at the at least one hot spot is used to analyze the at least one hot spot, namely to detect a state of a cell or microorganism constituting the hot spot, i.e. whether said cell or microorganism is a living cell or microorganism or a dead cell or microorganism.

Further, in an embodiment of the method according to the invention, several adjacent and/or overlapping surface areas are scanned using the method and particularly apparatus described herein, and the individual fluorescence images (e.g. obtained as described above, respectively) are automatically combined (e.g. using a stitching algorithm) to yield a larger overall fluorescence image, wherein particularly at least one hot spot of said overall image and the image coordinates of said at least one hot spot are automatically detected, and wherein particularly, in addition, the result data of one or several points of said surface area corresponding to said at least one hot spot are used to analyze the at least one hot spot, particularly to determine one of: a bacteria, a germ, a yeast, or a microorganism at said hot spot.

Further features and advantages of the invention shall be described by means of a detailed description of an embodiment with reference to the Figures, wherein
- Fig. 1: shows a schematical view of an embodiment of an apparatus according to the invention using a first movable deflection means for deflecting the incident light as well as the fluorescent light and the scattered light,
- Fig. 2: shows a schematical view of a further embodiment of an apparatus according to the invention using a first and a second movable deflection means,
- Fig. 3: shows a schematical view of a further embodiment of an apparatus according to the invention using a first deflection means and a telecentric lens for passing the scattered light traveling to the second sensor means,
- Fig. 4: shows a schematical view of a further embodiment of an apparatus according to the invention comprising a separate probe head connected to a housing of the apparatus via a light guiding means,
- Figs. 5 to 6: show schematical diagrams of a method according to the invention,
- Fig. 7: shows an example of an overall image of the fluorescence acquired with the method according to the invention, e.g. obtained by stitching together data of several adjacent and/or overlapping surface areas of an object.

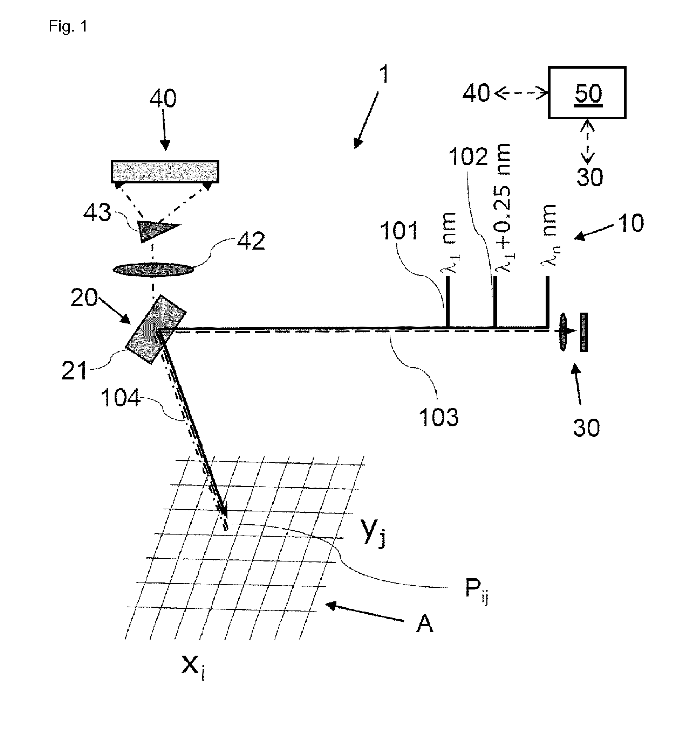

Fig. 1 shows an embodiment of a method and an apparatus (or system) for simultaneously detecting Raman data und fluorescence data.

The apparatus comprises an e.g. multi-wavelength laser device 10 configured to emit monochromatic (incident) light 101 of a first wavelength λ₁ via an (e.g. 2D or even 3D) first deflection means 20 that comprises an (e.g. MEMS) mirror 21 onto a first point Pᵢⱼ (e.g. i=j=1) of a surface A of an object that is to be analyzed, wherein xᵢ, yⱼ are the coordinates of said point on said surface area A. Said incident light 101 of the first wavelength λ₁ may be pulsed (e.g. one or several e.g. square pulses), particularly having a pulse duration in the ns range. Other pulse durations may also be used. Using a 3D first and/or second deflection means 30, 40 can be done in all embodiments of the present invention and further allows to focus the incident light 101, 102 in a direction normal to the surface area A which is useful for very rugged or curved surfaces and allows to improve resolution of the Raman data.

The surface area A is shown as a flat surface but may also comprise an arbitrary curvature or a rugged landscape. Particularly, the incident light 101 may be coupled via a beam splitter into an optical path to the first deflection means 20 or mirror 21. Preferably, the first wavelength λ₁ lies within the range from 350 nm to 1300 nm.

Due to this laser induced excitation (incident light beam 101) fluorescent light 103 is generated at said point Pᵢⱼ as well as inelastically scattered light 104 due to Raman scattering. This generated light 103, 104 is guided via the first deflection unit 20, particularly mirror 21, to corresponding sensor means 30, 40. It is to be noted that in the following the detection of the fluorescent light 103 using the second sensor means 30 may also be omitted. I.e. the embodiments described herein and below may also be configured to detect the scattered light 104 only.

Particularly, the fluorescent light 103 is reflected on the mirror 21 and guided back via said optical path to a second sensor means 30 which may be a camera, particularly having a CMOS or a CCD sensor, or any other suitable optical sensor for sensing the fluorescent light 103.

Further, the inelastically scattered light 104 is deflected by mirror 21, , which scattered light 104 is than guided to a first sensor means 40, e.g. in the form of a Raman spectrometer, particularly via a telecentric lens 43. Particularly, the first sensor 40 may comprise a prism 42 for breaking the scattered light 104 up into its constituent spectral components.

The second sensor means 30 acquires a fluorescent data set Fᵢⱼ(λ₁) of said point Pᵢⱼ containing the intensity of the fluorescent light 103 from said point Pᵢⱼ, whereas the first sensor means 40 acquires a scatter data or Raman data set Sᵢⱼ(A₁) of said point Pᵢⱼ that contains the spectrum of the inelastically scattered light of said point Pᵢⱼ, i.e., a plurality of intensities and their associated wavenumbers (or quantities derived therefrom wavelength etc,).

After having acquired said data Fᵢⱼ(λ₁), Sᵢⱼ(λ₁) for the first wavelength λ₁ a second emission of monochromatic incident light 102 may be triggered, wherein this time said incident light 102 has a second wavelength λ₂ that is larger than the first wavelength λ₁ by an amount preferably within the range from 0.1 nm to 5 nm, particularly 0.25nm, and wherein said incident light 102 of the second wavelength λ₂ travels along the same optical path to said point Pᵢⱼ as the incident light 101 of the first wavelength λ₁. Again, particularly, said incident light 102 of the second wavelength λ₂ may be pulsed (e.g. one or several e.g. square pulses), particularly having a pulse duration of e.g. in the ns range (see also above).

Again, as before, a fluorescence data set Fᵢⱼ(λ₂) is acquired, which is however optional this time, and a scatter data set Sᵢⱼ(λ₂) is acquired for said point Pᵢⱼ of the surface area A.

After recording of said data Fᵢⱼ(λ₂) (optional) and Sᵢⱼ(λ₂), a further monochromatic excitation of point Pᵢⱼ may be conducted using incident light 101 and/or 102, or further fluorescence data sets Fᵢⱼ(λₖ, tₙ) may be acquired for different successive times tₙ.

In case measuring of point Pᵢⱼ is finished, the first deflection means 20 is used (e.g. by moving the mirror 21 accordingly) to deflect the next incident light (beam) such that the next point Pᵢ₊₁ⱼ is irradiated with said light 101 or 102. Using the first deflection means 20 this scanning may be performed according to a pre-defined pattern, e.g. firstly, a line or row may be scanned by increasing the x-coordinate by a constant increment (i.e. x₂=x₁+dx) wherein after having scanned said row the next row may be scanned by increasing the y-coordinate by a constant increment (i.e. y₂=y₁+dy). Here i labels the rows while j labels the columns. Other patterns that scan the complete surface area A that is divided into a finite number of points Pᵢⱼ are also possible and within the scope of the present invention.

Now, the procedure is repeated and the same data F, S is recorded again for said next point Pᵢ₊₁ⱼ. This is repeated until the whole pre-defined surface area A that is divided into said finite number of said points Pᵢⱼ has been scanned. For instance, the scanned area A may have a size of 1cm².

The acquired data may be analyzed by means of a processing unit 50 of the apparatus 1 that is connected to the sensor means 30, 40 as follows (it is also conceivable to export the acquired data and to analyze said data on an external device, e.g. a multi-purpose computer).

The scatter or Raman data Sᵢⱼ(λ₁) (e.g. of a time tₙ) obtained for the incident light 101 having the first wavelength λ₁ may be subtracted from the scatter data Sᵢⱼ(λ₂) (e.g. of a succeeding time tₙ₊₁) obtained for the incident light 102 having the second wavelength λ₂ (i.e. the corresponding two spectra are subtracted)

For instance, if for a wavelength of the incident light 101 of e.g. 405nm autofluorescence occurs, said above-described subtraction is conducted. In other cases, where autofluorescence does not occur, said subtraction may be omitted.

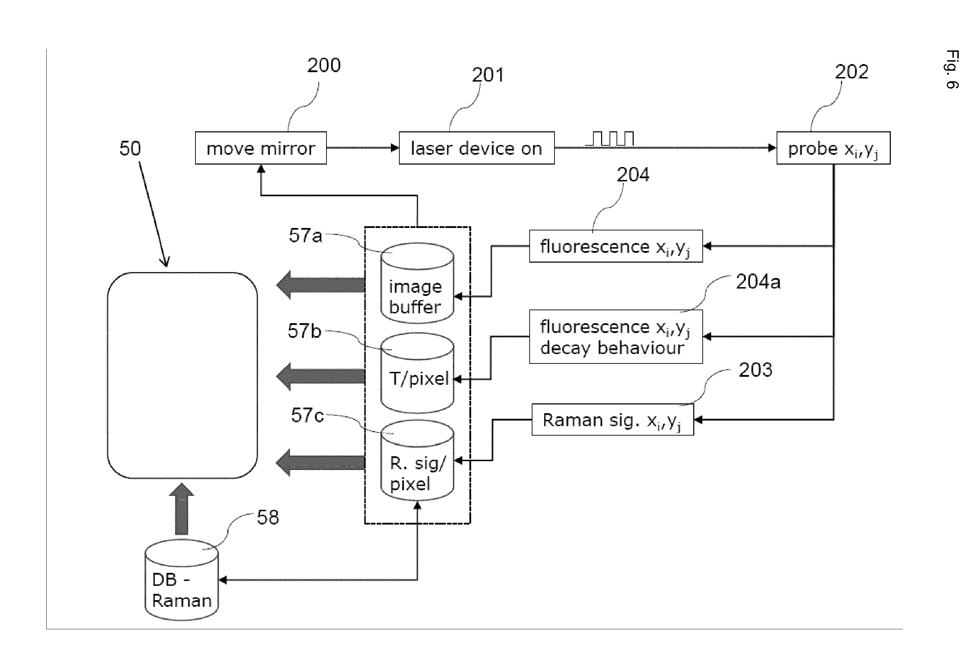

The resulting data is the relevant Raman data that may be used for the following analysis of the surface area A of the object under consideration:
- determination of the material, substance, liquid or element at the individual point Pᵢⱼ.
- automatic visualization and determination of a distribution of a purity grade or contaminations,
- forming an average of all or selected spectral data points for determining the material, substance, liquid or element,
- directed point data analysis of the individual point Pᵢⱼ based on specific features of the fluorescence image (e.g. a hot spot H) using the corresponding measurement data, e.g. a fluorescence image I, e.g. from a storage or buffer 57a of the apparatus 1 (e.g. cf. Fig. 6).

Further, the acquired fluorescence data Fᵢⱼ(λₖ), i.e., the intensities of the detected fluorescent light 103 associated to either the incident first wavelength λ₁ or the incident second wavelength λ₂, are combined to an image I.

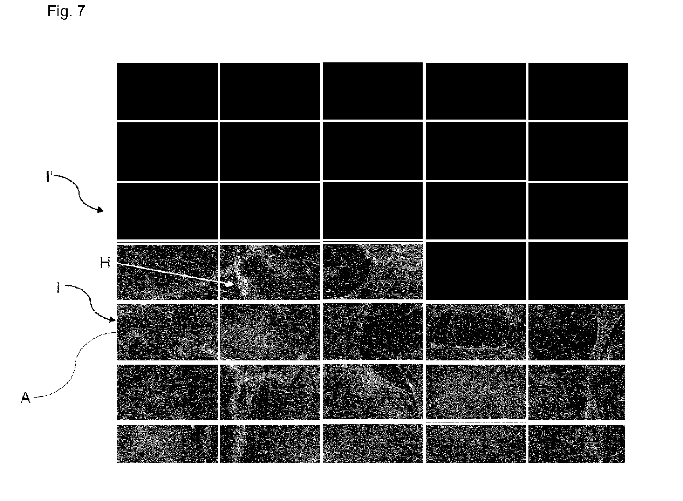

Thus, the whole surface area A can be visualized as a fluorescence image I (cf. Fig. 7). By using an e.g. known search algorithm individual hot spots H (i.e. local intensity maxima) and their coordinates i,j are identified and are analyzed together with the corresponding Raman data Rᵢⱼ of the respective point Pᵢⱼ, so that a detailed characterization of said hot spots H can be given. The characterization may consist of identifying bacteria, germs, yeasts and other microorganism.

Further, when the respective point Pᵢⱼ of said surface area A is irradiated with incident light 101, 102 of the first or of the second wavelength λ₁, λ₂, fluorescent light 103 is recorded for each point Pⱼⱼ for a number of successive times tₙ that are e.g. labelled with an index 1 to n. Preferably, at least three fluorescence intensities are successively recorded. When all points Pᵢⱼ have been scanned, the intensities of the same points Pᵢⱼ are written into a data set and labelled with successive indices. This data is then used or provided for determining the decay behaviour of the fluorescence and may be stored in a data storage 57b indicated in Fig. 6.

After having scanned a point Pᵢⱼ the apparatus 1 deflects the incident light 101, 102 to the next point, where the same procedure is conducted. In case all points of the surface area A have been scanned, the individual points Pᵢⱼ belonging to the same index may be compounded to a fluorescent image I which may then be output or visualized.

For the detected hot spots H (cf. Fig. 7), e.g. a microorganism at Pᵢⱼ, the decay behaviour of the fluorescence and the Raman data Rᵢⱼ is used for diagnosis. The data may be acquired from living or dead microorganisms or generally from other arbitrary materials and may serve for determining the state of the microorganism.

Furthermore, several images I, I' of several surface areas A may be joined by stitching as indicated in Fig. 7 to be able to analyze larger surface areas.

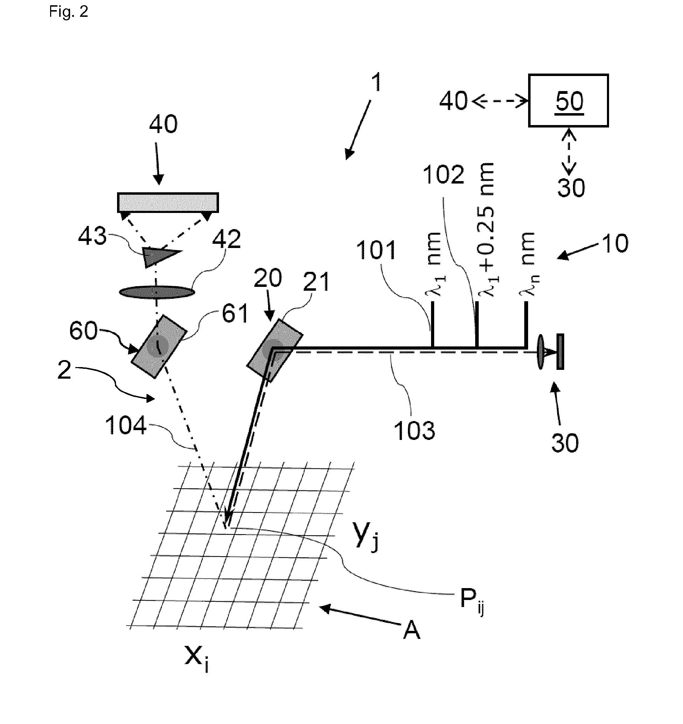

Further, the embodiment in Fig. 2 comprises, in contrast to the apparatus of Fig. 1 an additional second deflection means 60 that may also comprise a movable (e.g. MEMS) mirror 61 for capturing/deflecting the elastically scattered light 104 of the respective point Pᵢⱼ and guiding the latter to the first sensor 40 via a telecentric lens 42 and e.g. a prism 43 of the first sensor means 40 (e.g. Raman spectrometer). Here, the second deflection means 60/mirror 61 is moved synchronously with the first deflection means 20/mirror 21 and the incident light 101, 102 and the fluorescent light 103 travel along the same optical path between the respective point Pᵢⱼ and the first deflection means 20, while the scattered light 104 is guided separately from the respective point Pᵢⱼ to the second deflection means 60/mirror 61.

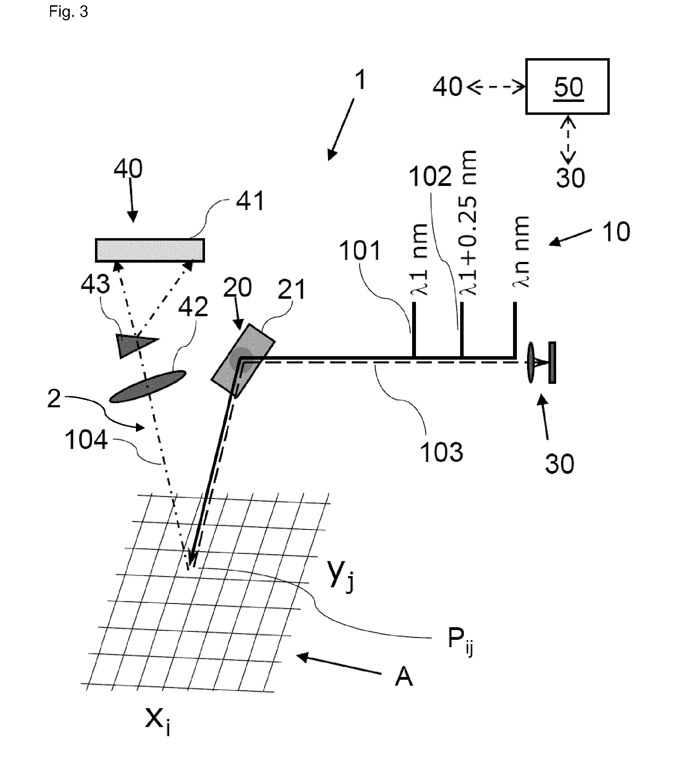

Fig. 3 shows a further embodiment of the apparatus 1, wherein in contrast to Fig. 2 the second deflection means 60 is omitted and a telecentric lens 42 (or a relay optics) is used instead to guide the scattered light 104 to the second sensor means 40.

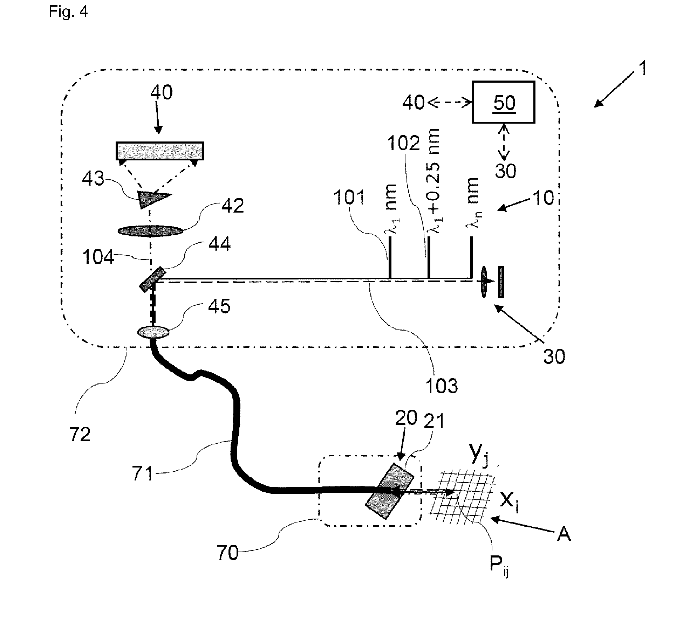

Furthermore, Fig. 4 shows an embodiment of the apparatus 1 according to the invention, wherein in contrast to the other embodiments the apparatus 1 now comprises a separate probe head 70 comprising said first deflection means 20/mirror 21, wherein the apparatus 1 further comprises a light guiding means 71 for guiding said incident light 101, 102 to the probe head 70 and the fluorescent light 103 and the scattered light 104 from the probe head 70 to a separate housing 72 of the apparatus 1, which housing accommodates said sensor means 30, 40 and processing unit 50.

Particularly, the incident light 101, 102 is coupled into the light guiding means 71 comprising one or several optical fibers by means of e.g. a mirror 44 and a lens arrangement 45. The fluorescent light 103 coming from the respective point Pᵢⱼ is reflected via said mirror 44 and travels - at least in parts - the optical path of the incident light 101, 102 towards the first sensor means 30, whereas the elastically scattered light 104 is guided by mirror 44 to the first sensor means 40 via a telecentric lens 42.

The probe head 70 may be formed as an endoscope and particularly allows in-vivo diagnosis as well as analysing of areas which are difficult to access.

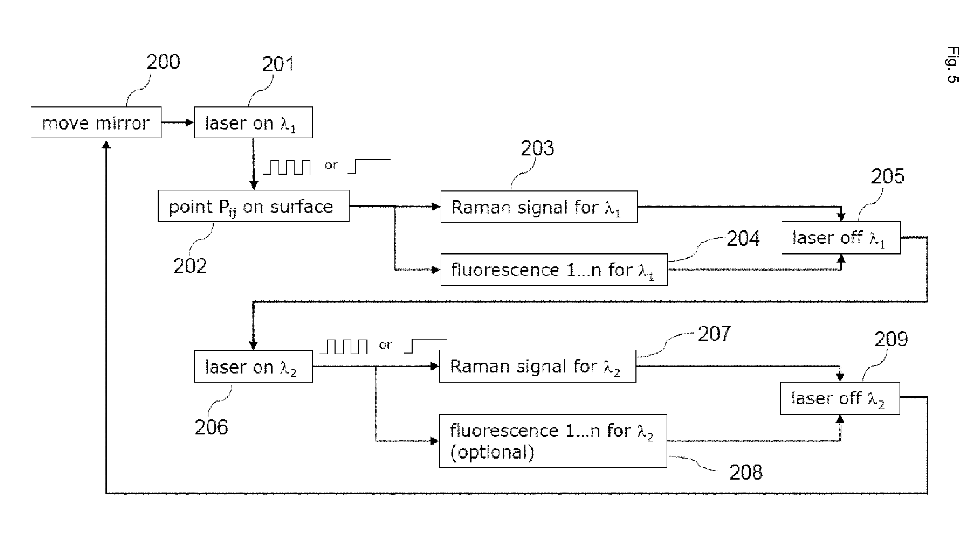

Further, Fig. 5 illustrates - in conjunction with Fig. 6 - the course of a measurement conducted with an apparatus 1 according to the invention as shown in Figs. 1 to 4. According to Fig. 5, the area A that is to be scanned is particularly known concerning its dimensions. In case a measurement is initiated, the mirror 21 of the first deflection means is moved 200 so as to deflects the incident light (beam) 101 having the first wavelength λ₁ that is turned on 201 onto a first point Pᵢⱼ of the surface area A 202.

The Raman signals Sᵢⱼ and fluorescence signals Fᵢⱼ generated thereby are simultaneously recorded 203, 204, wherein the fluorescence signals are preferably recorded repeatedly at successive times (preferably at least three times) 204. When this data has been recorded, the laser emission λ₁ is turned off 205 and the incident light 102 having the second wavelength λ₂ is turned on 206. Again, for point Pᵢⱼ the Raman signals Sᵢⱼ and optionally the fluorescence signals Fᵢⱼ are simultaneously measured 207, 208, wherein particularly the fluorescence signals Fᵢⱼ are repeatedly acquired as described above, and the laser is turned off again 209. In case the data is acquired, the next point is considered 200 and the procedure 201 to 209 is repeated until the whole area A has been scanned.

As indicated in Fig. 6 the processing unit 50 is configured to analyse and process the acquired data as described above. Particularly, the fluorescence data Fᵢⱼ is stored in a buffer 57a (also denoted as data storage or memory) for compounding it so as to yield a fluorescence image I of all points Pᵢⱼ (cf. Fig 7). The decay behaviour 204a can be determined from successive fluorescence data (see above) and can be stored in memory 57b.

Memory 57c is configured to store the Raman data Rᵢⱼ per point Pᵢⱼ. A compounded image can be generated and visualized in order to e.g. illustrate the distribution of detected elements etc.

Data base or memory 28 is configured to store reference data such as reference spectra that can be compared with the measured data (e.g. stored in memory 57c).

## Claims

1. An apparatus for analyzing a surface area of an object, comprising:
- a laser device (10) configured to emit monochromatic incident light (101) of a first wavelength (λ₁) as well as optionally a monochromatic incident light (102) of a second wavelength (λ₂) that differs from the first wavelength (λ₁),
- a first deflection means (20) configured to deflect said incident light (101, 102) onto a point (Pᵢⱼ(xᵢ, yⱼ)) of a surface area (A) of an object that is to be analyzed so that scattered light (104) is generated at said point (Pᵢⱼ(xᵢ, yⱼ)), wherein said deflection means (20) is further configured to deflect said incident light (101, 102) such that said surface area (A) is scanned in a pointwise fashion by said incident light (101, 102),
- a first sensor means (40) configured to detect said scattered light (104) and to provide from said detected scattered light (104) a scatter data set (Sᵢⱼ(λₖ)) for the respective point (Pᵢⱼ(xᵢ, yⱼ)), wherein the respective scatter data set (Sᵢⱼ(λₖ)) comprises intensities of the detected scattered light (104) for different wave numbers,
- a processing unit (50) for processing and/or analyzing said data sets.

2. The apparatus according to claim 1, **characterized in that** the apparatus (1) comprises a second sensor means (30) configured to detect fluorescent light (103) generated at the respective point (Pᵢⱼ) and to provide from said detected fluorescent light (103) a fluorescence data set (Fᵢⱼ(Aₖ)) for the respective point (Pᵢⱼ) comprising the intensity of the detected fluorescent light (103) from the respective point (Pᵢⱼ), wherein particularly the first sensor means (40) comprises a Raman spectroscope, wherein said scattered light (104) is inelastically scattered light (104).

3. The apparatus according to claim 1 or 2, **characterized in that** the apparatus (1) is a designed as mobile apparatus that is designed to be carried by a user.

4. The apparatus according to one of the preceding claims, **characterized in that** the first deflection means (20) comprises a scanning device or a movable mirror (21), particularly an MEMS mirror, for deflecting said incident light (101, 102).

5. The apparatus according to one of the preceding claims, **characterized in that** the first deflection means (20) is configured to also deflect said fluorescent light (103) coming from the respective point (Pᵢⱼ) and traveling towards the second sensor means (30).

6. The apparatus according to one of the preceding claims, **characterized in that** the apparatus (1) is configured to let the scattered light (104) travel along an optical path (2) to the first sensor means (40), which optical path (2) bypasses the first deflection means (20).

7. The apparatus according to one of the preceding claims, **characterized in that** said apparatus (1) comprises a second deflection means (60) for deflecting said scattered light (104) traveling to the first sensor means (40).

8. The apparatus according to one of the claims 1 to 5, **characterized in that** the first deflection means (20) is also configured to deflect said scattered light (104) coming from the respective point (Pᵢⱼ) and traveling towards the first sensor means (40).

9. The apparatus according to one of the preceding claims, **characterized in that** the apparatus (1) comprises a probe head (70) comprising said first deflection means (20), wherein the apparatus (1) further comprises a light guiding means (71) for guiding said incident light (101, 102) to the probe head (70) and the fluorescent light (103) and the scattered light (104) from the probe head (70) to a separate housing (72) of the apparatus (1), which housing accommodates said sensor means (30, 40) and processing unit (50).

10. The apparatus according to one of the preceding claims, wherein the apparatus (1) is configured to
(a) irradiate a point (Pᵢⱼ) of the surface area (A) with incident light (101) of said first wavelength (λ₁) and to record a corresponding scatter data set (Sᵢⱼ(A₁)) as well as optionally at least one fluorescence data set (Fᵢⱼ(A₁)) or optionally several fluorescence data sets (Fᵢⱼ(A₁, tₙ)) at different successive times (tₙ), and wherein optionally the apparatus (1) is further configured to irradiate said point (Pᵢⱼ) thereafter with incident light (102) of said second wavelength (λ₂) and to record a further corresponding scatter data set (Sⱼⱼ(λ₂)) and optionally at least one further corresponding fluorescence data set (Fᵢⱼ(A₁)) or optionally several fluorescence data sets (Fᵢⱼ(λ₂, tₙ)) at different successive times tₙ,
(b) optionally repeat step (a) one or several times for said point (Pᵢⱼ),
(c) repeat steps (a) to (c) starting with step (a) for a next point (Pᵢ₊₁ⱼ) of the surface (A) in case the whole surface area (A) has not yet been scanned completely, wherein the apparatus (1) is configured to use the first deflection means (20) for deflecting the incident light (101, 102) onto said next point (Pᵢ₊₁ⱼ).

11. A method for analyzing a surface area (A) of an object, particularly using an apparatus (1) according to one of the preceding claims, wherein points (Pᵢⱼ) of a surface area (A) are each successively irradiated with incident monochromatic light (101, 102) of a first and optionally of a different second wavelength (λ₁, λ₂), wherein said incident light (101, 102) is successively deflected onto said points (Pᵢⱼ) using a first deflection means (20), wherein scattered light (104), particularly inelastically scattered light (104), from the respective point (Pᵢⱼ) is sensed and provided as a scatter data set (Sᵢⱼ(λₖ)) at least for the first wavelength (λ₁) and optionally also for the second wavelength (λ₂), which scatter data sets (Sᵢⱼ(λₖ)) each comprise intensities of the detected scattered light (104) for different wave numbers, and wherein said data sets (F, S) are used for analyzing said surface area (A), and wherein optionally fluorescent light (103) generated at the respective point (Pᵢⱼ) is sensed and provided as a fluorescence data set (Fᵢⱼ(λₖ)) for the first wavelength (λ₁) and optionally also for the second wavelength (λ₂), which fluorescence data sets (Fᵢⱼ(λₖ)) each comprise the intensity of the detected fluorescent light (103) from the respective point (Pᵢⱼ).

12. The method according to claim 11, **wherein**
(a)a point (Pij) of the surface area (A) is irradiated with incident light (101) of said first wavelength (λ₁) and a corresponding scatter data set (Sᵢⱼ(λ₁)) and optionally at least one corresponding fluorescence data set (Fᵢⱼ(λ₁)) or optionally several corresponding fluorescence data sets (Fᵢⱼ(λ₁, tₙ)) at different successive times (tₙ) are recorded, and wherein thereafter said point (Pᵢⱼ) is optionally irradiated with incident light (102) of said second wavelength (λ₂) and a further corresponding scatter data set (Sᵢⱼ(λ₂)) and optionally a further corresponding fluorescence data set (Fᵢⱼ(λ₂)) or optionally several corresponding fluorescence data sets (Fᵢⱼ(λ₂, tₙ)) at different successive times (tₙ) are recorded,
(b)step (a) is optionally repeated one or several times for the first point (Pᵢⱼ),
(c) in case the whole surface area has not yet been scanned completely, the incident light is deflected onto a next point (Pᵢ₊₁ⱼ) using the first deflection means and steps (a) to (c) are repeated for said next point (Pᵢ₊₁ⱼ) starting with step (a).

13. The method according to claim 11 or 12, wherein the scatter data of the scatter data set (Sᵢⱼ(λ₁)) of the respective point (Pᵢⱼ) of the surface area (A) for the first wavelength (λ₁) is subtracted from the scatter data of the scatter data set (Sᵢⱼ(λ₂)) of said respective point (Pᵢⱼ) for the second wavelength (λ₂) yielding result data (Rᵢⱼ) for the respective point (Pᵢⱼ), or wherein the scatter data set (Sᵢⱼ(λ₁) is used as result data (Rᵢⱼ), wherein particularly said result data (Rᵢⱼ) is used for at least one of:
- determining a material, substance, liquid, or element of the respective point (Pᵢⱼ) of said surface area (A),
- determining and/or visualizing a distribution of a purity grade or of a contamination of said surface area (A),
- forming an average of the result data (Rᵢⱼ) over all or a number of selected points (Pᵢⱼ) of the surface area (A), particularly in order to determine one of: a material, a substance, a liquid, or element comprised by said surface area (A).
- analyzing the result data (Rᵢⱼ) for one or several points (Pᵢⱼ) of the surface area (A) at which a fluorescence image (I), particularly generated from the fluorescence data (Fᵢⱼ) for the first wavelength (λ₁), shows a hot spot (H).

14. The method according to one of the claims 11 to 13, wherein the fluorescence data of the fluorescence data sets (Fᵢⱼ(A₁)) of the points (Pᵢⱼ) associated to the first wavelength (λ₁) are compounded to form a fluorescence image (I) of the surface area (A) comprising a fluorescence light intensity value (Iᵢⱼ) for each point (Pᵢⱼ) of the surface area (A), and wherein particularly at least one hot spot (H) of said image (I) and the image coordinates of said at least one hot spot (H) are automatically detected, and wherein particularly in addition the result data (Rᵢⱼ) of one or several points (Pᵢⱼ) of said surface area (A) corresponding to said at least one hot spot (H) is used to analyze the at least one hot spot (H), particularly to determine one of: a bacteria, a germ, a yeast, or a microorganism at said at least one hot spot (H).

15. The method according to one of the claims 11 to 14, wherein fluorescence data (Fᵢⱼ(λₖ,tₙ)) of the respective point (Pᵢⱼ) recorded at successive different times (tₙ) is used to determine the decay behaviour of the fluorescence light (103) at the respective point (Pᵢⱼ), wherein particularly the decay behaviour and said result data (Rᵢⱼ) at the at least one hot (H) spot is used to analyze the at least one hot spot (H), particularly for determining a state of a cell or of a microorganism at said at least one hot spot (H).
